# FASCICULE DE BREVET EUROPEEN

(11) **EP 1 663 854 B1**
(45) Date de publication et mention de la délivrance du brevet: **07.03.2007**
(21) Numéro de dépôt: 04787367.4
(22) Date de dépôt: 13.09.2004
(51) Int. Cl.: C01B 3/06, C01B 35/12

(54) **PROCEDE POUR MAINTENIR LIQUIDE A LA TEMPERATURE AMBIANTE UNE SOLUTION AQUEUSE DE BORATE DE SODIUM**
VERFAHREN ZUM HALTEN EINER WÄSSRIGEN LÖSUNG VON NATRIUMBORAT IN FLÜSSIGER FORM BEI RAUMTEMPERATUR
METHOD FOR MAINTAINING AN AQUEOUS SOLUTION OF SODIUM BORATE IN A LIQUID FORM AT ROOM TEMPERATURE

(30) Priorité: 16.09.2003 FR 0310871; 26.09.2003 FR 0311329
(43) Date de publication de la demande: 07.06.2006
(73) Titulaire: Peugeot Citroën Automobiles S.A., 78140 Vélizy Villacoublay (FR)
(72) Inventeur: RANJARD, Jean-François, F-78000 VERSAILLES (FR); GLIPA, Xavier, F-91190 GIF-SUR-YVETTE (FR)
(74) Mandataire: Lagrange, Jacques Etienne M.M.
(86) Numéro de dépôt international: PCT/FR2004/002321
(87) Numéro de publication internationale: WO 2005/028361

(56) Documents cités:
- US-A1- 2003 091 879
- US-A1- 2003 118 504
- AMENDOLA S C ET AL: "A safe, portable, hydrogen gas generator using aqueous borohydride solution and Ru catalyst" INTERNATIONAL JOURNAL OF HYDROGEN ENERGY, ELSEVIER SCIENCE PUBLISHERS B.V., BARKING, GB, vol. 25, no. 10, octobre 2000 (2000-10), pages 969-975, XP004205752 ISSN: 0360-3199
- AMENDOLA S C ET AL: "AN ULTRASAFE HYDROGEN GENERATOR: AQUEOUS, ALKALINE BOROHYDRIDE SOLUTIONS AND RU CATALYST" PREPRINTS OF SYMPOSIA - AMERICAN CHEMICAL SOCIETY. DIVISION OF FUEL CHEMISTRY, AMERICAN CHEMICAL SOCIETY,, US, vol. 44, no. 4, 1999, pages 864-868, XP001028503 ISSN: 1521-4648

## Description

La présente invention est relative au traitement d'une solution aqueuse de borate de sodium résultant de la production d'hydrogène par décomposition de borohydrure de sodium, l'hydrogène étant destiné à des applications variées, et notamment à l'alimentation d'une pile à combustible d'un véhicule automobile.

Pour des raisons diverses telles que la recherche de l'indépendance énergétique, la réduction de la pollution, la réduction des émissions de gaz à effet de serres, ou afin d'économiser les ressources en hydrocarbure, on cherche à développer les procédés de production d'énergie à partir d'hydrogène. Ces procédés sont notamment des procédés utilisant des piles à combustible dans lesquelles l'hydrogène réagit avec un gaz oxygéné, pour produire de l'électricité.

Le développement de ces techniques suppose la mise au point de techniques de stockage d'hydrogène efficaces et sûres. On connaît par exemple le stockage d'hydrogène sous forme de gaz comprimé, on connaît également le stockage d'hydrogène sous forme de gaz liquéfié. Mais aucune de ces techniques ne répond parfaitement aux contraintes de l'industrie automobile notamment qui souhaite pouvoir équiper les véhicules de piles à combustibles alimentées en hydrogène. En effet, le stockage de gaz sous forme de gaz comprimé est très volumineux et peut conduire à des problèmes de sécurité du fait des très hautes pressions utilisées. Le stockage liquide présente également des inconvénients d'une part parce que la liquéfaction du gaz nécessite une utilisation d'énergie importante, d'autre part parce que la manipulation d'hydrogène liquide à des températures extrêmement basses comporte des risques qui rendent délicate son application à l'automobile.

Le problème de la production et du stockage de l'hydrogène dans des conditions de sécurité satisfaisante se pose également dans d'autres domaines d'application de l'hydrogène et par exemple dans le domaine médical, dans l'agroalimentaire ou dans les traitements thermiques.

Afin de remédier à ces inconvénients, on a proposé de stocker l'hydrogène dans les véhicules automobiles sous forme de borohydrure de sodium et de produire de l'hydrogène à la demande en décomposant le borohydrure de sodium par réaction avec de l'eau pour produire d'une part de l'hydrogène et d'autre part un résidu constitué d'une solution aqueuse de borate de sodium. Cette technique qui a l'avantage de permettre de stocker de l'hydrogène de façon sûre et de produire de l'hydrogène de façon commode pour alimenter une pile à combustible d'un véhicule automobile, présente cependant un inconvénient. En effet, cette solution aqueuse de borate de sodium est récupérée et stockée dans un réservoir qui doit être vidé régulièrement. Or, la solution de borate de sodium qui est liquide à la température de réaction de l'eau avec le borohydrure de sodium (entre 100 et 180°C), a tendance à cristalliser lorsqu'elle se refroidit jusqu'à la température ambiante ce qui rend difficile la vidange du réservoir de borate de sodium.

Le but de la présente invention est de remédier à cet inconvénient en proposant un moyen pour conserver liquide à la température ambiante les solutions de borate de sodium issues de la production d'hydrogène par décomposition du borohydrure de sodium.

A cet effet l'invention a pour objet un procédé pour maintenir liquide à une température de stockage une solution aqueuse de borate de sodium selon lequel pour faire passer ladite solution d'une température initiale à la température de stockage, on soumet ladite solution à un traitement thermique comprenant au moins un refroidissement ou un réchauffement à une vitesse comprise entre 1 et 100°C par minute, jusqu'à une température de maintien comprise entre - 50°C et + 200°C, suivi d'un maintien à la température de maintien pendant un temps compris entre 1 seconde et 100 heures, suivi d'un refroidissement ou un réchauffement à une vitesse compris entre 1 et 100°C.

De préférence, le traitement thermique comprend au moins deux maintiens à des températures de maintien différentes.

Avant réalisation du traitement thermique la solution aqueuse de borate de sodium est à u ne température initiale comprise entre 100 et 180°C, et après réalisation du traitement thermique, la solution aqueuse de borate de sodium est à une température de stockage comprise entre - 50°C et 300°C et de préférence entre - 20°C et 50°C.

De préférence, la solution aqueuse du borate de sodium contient de 5% à 65% en masse de borate de sodium et peut contenir en outre de 0% à 10% en masse de soude.

L'invention concerne également un procédé pour générer de l'hydrogène selon lequel on fait réagir du borohydrure de sodium avec de l'eau et on sépare d'une part un mélange constitué principalement d'hydrogène, et d'autre part une solution aqueuse de borate de sodium, dans lequel, on soumet la solution aqueuse de borate de sodium au traitement thermique selon l'invention.

Ce procédé peut être utilisé pour alimenter en hydrogène une pile à combustible.

De préférence, la pile à combustible est la pile à combustible d'un véhicule automobile.

Ce procédé peut également être utilisé pour générer de l'hydrogène utilisé notamment, en médecine, dans l'agroalimentaire, dans la fabrication de composant électronique, dans la réalisation de traitements thermiques de produits métalliques.

L'invention va maintenant être décrite plus en détails, mais d'une façon non limitative, et illustrée par un exemple.

Les inventeurs ont constaté de façon nouvelle et inattendue qu'une solution aqueuse de borate de sodium issue du procédé de production d'hydrogène par décomposition catalytique d'une solution aqueuse de borohydrure de sodium contenant une faible proportion de soude, conserve sa fluidité lorsqu'elle est soumise à un traitement thermique consistant en un enchaînement de séquences de refroidissement et/ou de réchauffement séparées par des maintiens à des paliers de températures. Les refroidissements ou les réchauffements doivent être effectués à des vitesses de réchauffage ou de refroidissement compris entre 1 °C par minute et 100°C par minute, et de préférence inférieure à 50°C par minute, et mieux encore, inférieure à 20°C par minute. Les températures des paliers de maintien doivent être comprises entre - 50°C et + 200°C, et les temps de maintien à ces paliers doivent être compris entre 1 seconde et 100 heures, de préférence entre 10 secondes et 50 heures et mieux encore entre 30 secondes et 2 heures. Les vitesses de refroidissement ou de réchauffage, les températures des paliers, la durée des paliers, l'ordre d'enchaînement des séquences sont autant de paramètres qui permettent de contrôler le procédé. Le procédé est utilisé pour amener une solution aqueuse du borate de sodium produite à une température initiale à une température de stockage. La température de stockage est comprise entre - 50°C et 300°C, et de préférence, comprise entre - 20°C et 50°C. Ces températures préférentielles correspondent aux températures que peut atteindre un réservoir d'un véhicule automobile restant dehors, selon la saison et le lieu.

A titre d'exemple on a réalisé le traitement suivant sur une solution aqueuse de borate de sodium qui était issue de la production d'hydrogène par décomposition de borohydrure de sodium par réaction avec de l'eau pour alimenter en hydrogène une pile à combustible :
- la solution aqueuse de borate de sodium était à la température de 135°C à la sortie du réacteur de décomposition du borohyd rure de sodium,
- la solution a d'abord été refroidie jusqu'à la température de 80°C à la vitesse de 5°C par minute.
- La solution aqueuse de borate de sodium a été maintenue à la température de 80°C pendant 12 heures,
- puis la solution aqueuse de borate de sodium a été refroidie jusqu'à la température de 60°C à la vitesse de 5°C par minute,
- la solution aqueuse de borate de sodium a alors été maintenue à la température de 60°C pendant 8 heures,
- puis la solution aqueuse de borate de sodium a été refroidie jusqu'à la température de 40°C à la vitesse de 5°C par minute,
- la solution de borate de sodium a alors été maintenue à la température de 40°C pendant 15 heures,
- enfin, la solution aqueuse de borate de sodium a été amenée à la température ambiante, soit 20°C environ, à la vitesse de 5°C par minute.

A la suite de ce traitement thermique, la solution aqueuse de borate de sodium n'a pas présenté de cristallisation mais est restée sous forme de liquide visqueux. La solution ainsi obtenue était facilement manipulable et pouvait être extraite du réservoir de stockage de la solution aqueuse de borate de sodium sans aucune difficulté.

Ce procédé est particulièrement adapté aux traitements de la solution aqueuse de borate de sodium résultant du procédé de production d'hydrogène destiné à des usages divers et plus particulièrement destiné à alimenter à la demande la pile à combustible d'un véhicule automobile.

Dans un véhicule automobile comportant une pile à combustible alimentée en hydrogène par décomposition du borohydrure de sodium, le borodhydrure de sodium est stocké sous forme de solution liquide dans un réservoir. Cette solution liquide a une concentration massique en borohydrure de sodium comprise entre 5 et 35 %, et de préférence de 15 % et 25 %. Cette solution peut comporter en outre une teneur comprise entre 0 % et 10 % en masse de soude et de préférence entre 0,5 % et 4 %, ajoutée pour stabiliser la solution aqueuse de borohydrure de sodium. Bien que cet ajout soit habituel, il n'est pas obligatoire. Lorsque le véhicule a besoin d'une production d'énergie électrique, du borohydrure de sodium en solution aqueuse est prélevé dans le réservoir de carburant et envoyé dans un réacteur catalytique où il est décomposé par la réaction avec l'eau, en hydrogène d'une part, et en borate de sodium d'autre part. Cette réaction est effectuée à une température comprise entre 100 à 180°C et de préférence supérieure à 110°C et mieux supérieure à 130°C, mais inférieure à 150°C et mieux inférieure à 140°C. Le produit de la réaction est alors envoyé dans un séparateur de gaz liquide qui sépare d'une part l'hydrogène gazeux mélangé éventuellement avec de la vapeur d'eau, et d'autre part une solution aqueuse contenant principalement du borate de sodium, qui est à une température également entre 100 et 180°C, de préférence entre 110°C et 150°C, et mieux comprise entre 130°C et 140°C.

Conformément au procédé de la présente invention, cette solution aqueuse de borate de sodium contenant également un peu de soude, est amenée à la température de stockage par un traitement thermique consistant en une succession de réchauffages ou de refroidissements et de maintiens à des températures de maintien comme cela vient d'être décrit. A la suite de ces traitements thermiques, la solution aqueuse de borate de sodium est envoyée dans un réservoir de stockage dans lequel elle reste liquide jusqu'à la vidange.

Comme on l'a déjà indiqué, le procédé peut être utilisé dans toute installation destinée à produire de l'hydrogène par décomposition du borohydrure de sodium, quelle que soit l'utilisation envisagée pour l'hydrogène ainsi produit.

## Revendications

1. Procédé pour maintenir liquide à une température de stockage une solution aqueuse de borate de sodium selon lequel pour faire passer ladite solution d'une température initiale à la température de stockage, on soumet ladite solution aqueuse de borate de sodium à un traitement thermique com prenant au moins un refroidissement ou un réchauffement à une vitesse comprise entre 1 et 100°C par minute, jusqu'à une température de maintien comprise entre - 50°C et + 200°C, suivi d'un maintien à la température de maintien pendant un temps compris entre 1 seconde et 100 heures, suivi d'un refroidissement ou un réchauffement à une vitesse compris entre 1 et 100°C.

2. Procédé selon la revendication 1, **caractérisé en ce que** le traitement thermique comprend au moins deux maintiens à des températures de maintien différentes.

3. Procédé selon la revendication 1 ou la revendication 2, **caractérisé en ce que** avant réalisation du traitement thermique la solution aqueuse de borate de sodium est à une température initiale comprise entre 100 et 180°C, et après réalisation du traitement thermique, la solution aqueuse de borate de sodium est à une température de stockage comprise entre - 50°C et 300°C.

4. Procédé selon la revendication 3 **caractérisé en ce que** la température de stockage est comprise entre - 20°C et 50°C.

5. Procédé selon l'une quelconque des revendications 1 à 4, **caractérisé en ce que** la solution aqueuse de borate de sodium contient de 5% à 65% en masse de borate de sodium.

6. Procédé selon la revendication 5, **caractérisé en ce que** la solution aqueuse de borate de sodium contient en outre de 0% à 10% en masse de soude.

7. Procédé pour générer de l'hydrogène selon lequel on fait réagir du borohydrure de sodium avec de l'eau et on sépare d'une part un mélange gazeux constitué principalement d'hydrogène, et d'autre part une solution aqueuse de borate de sodium, **caractérisé en ce que** on soumet la solution aqueuse de borate de sodium au procédé selon l'une quelconque des revendications 1 à 6.

8. Utilisation du procédé selon la revendication 7 pour alimenter en hydrogène une pile à combustible.

9. Utilisation selon la revendication 8 **caractérisée en ce que** la pile à combustible est la pile à combustible d'un véhicule automobile.

10. Utilisation du procédé selon la revendication 7 pour générer de l'hydrogène utilisé en médecine, dans l'agroalimentaire, dans la fabrication de composants électroniques, dans la réalisation de traitements thermiques de produits métalliques.

## Claims

1. Method for maintaining an aqueous solution of sodium borate in liquid form at a storage temperature, according to which in order to change the temperature of said solution from an initial temperature to the storage temperature said aqueous solution of sodium borate is subjected to a heat treatment including at least one cooling or heating process at a rate of between 1° and 100°C per minute until a holding temperature of between -50°C and +200°C is reached, followed by the holding temperature being maintained for a period in the range of between 1 second and 100 hours, followed by a cooling or heating process at a rate of between 1° and 100°C.

2. Method according to Claim 1, **characterised in that** the heat treatment includes different holding temperatures being maintained at least twice.

3. Method according to Claim 1 or Claim 2, **characterised in that** before the heat treatment is conducted the aqueous solution of sodium borate is at an initial temperature of between 100° and 180°C, and after the heat treatment is conducted the aqueous solution of sodium borate is at a storage temperature of between -50°C and 300°C.

4. Method according to Claim 3, **characterised in that** the storage temperature lies between -20°C and 50°C.

5. Method according to any one of Claims 1 to 4, **characterised in that** the aqueous solution of sodium borate contains 5% to 65% by mass of sodium borate.

6. Method according to Claim 5, **characterised in that** the aqueous solution of sodium borate additionally contains 0% to 10% by mass of soda.

7. Method for generating hydrogen, according to which sodium borohydride is reacted with water, and the gaseous mixture formed primarily of hydrogen, on the one hand, and an aqueous solution of sodium borate, on the other, is separated, **characterised in that** the aqueous solution of sodium borate is subjected to the method according to any one of Claims 1 to 6.

8. Use of the method according to Claim 7 to supply a fuel cell with hydrogen.

9. Use according to Claim 8, **characterised in that** the fuel cell is the fuel cell of a motor vehicle.

10. Use of the method according to Claim 7 to generate hydrogen used in medicine, in food processing, in the production of electronic components, in the performance of heat treatments on metal products.

## Patentansprüche

1. Verfahren zum Halten einer wässerigen Natriumboratlösung bei Lagerungstemperatur in flüssiger Form, wonach zum Übergehenlassen der Lösung von einer Anfangsternperatur zu einer Lagerungstemperatur die wässerige Natriumboratlösung einer thermischen Behandlung unterzogen wird, umfassend mindestens eine Abkühlung oder eine Erwärmung mit einer Geschwindigkeit zwischen 1 und 100°C pro Minute bis zu einer Aufrechterhaltungstemperatur zwischen -50 und +200°C, gefolgt vom Halten bei einer Aufrechterhaltungstemperatur während einer Zeitspanne zwischen 1 Sekunde und 100 Stunden, gefolgt von einer Abkühlung oder einer Erwärmung mit einer Geschwindigkeit zwischen 1 und 100°C.

2. Verfahren nach Anspruch 1, **dadurch gekennzeichnet, dass** die thermische Behandlung mindestens zweimal Halten bei zwei verschiedenen Aufrechterhaltungstemperaturen umfasst.

3. Verfahren nach Anspruch 1 oder Anspruch 2, **dadurch gekennzeichnet, dass** sich die wässerige Natriumboratlösung vor Durchführung der thermischen Behandlung bei einer Anfangstemperatur zwischen 100 und 180°C befindet, und dass sich die wässerige Natriumboratlösung nach Durchführung der thermischen Behandlung bei einer Lagerungstemperatur zwischen -50 und 300°C befindet.

4. Verfahren nach Anspruch 3, **dadurch gekennzeichnet, dass** die Lagerungstemperatur zwischen 20 und 50°C liegt.

5. Verfahren nach irgendeinem der Ansprüche 1 bis 4, **dadurch gekennzeichnet, dass** die wässerige Natriumboratlösung 5 bis 65 Massen-% Natriumborat enthält.

6. Verfahren nach Anspruch 5, **dadurch gekennzeichnet, dass** die wässerige Natriumboratlösung außerdem 0 bis 10 Massen-% Soda enthält.

7. Verfahren zur Erzeugung von Wasserstoff, wonach Natriumborhydrid mit Wasser umgesetzt und einerseits eine gasförmige Mischung, hauptsächlich bestehend aus Wasserstoff, und andererseits eine wässerige Natriumboratlösung abgetrennt werden, **dadurch gekennzeichnet, dass** die wässerige Natriumboratlösung dem Verfahren nach irgendeinem der Ansprüche 1 bis 6 unterzogen wird.

8. Verwendung des Verfahrens nach Anspruch 7 zur Versorgung einer Brennstoffzelle mit Wasserstoff.

9. Verwendung nach Anspruch 8, **dadurch gekennzeichnet, dass** die Brennstoffzelle eine Brennstoffzelle eines Kraftfahrzeugs darstellt.

10. Verwendung des Verfahrens nach Anspruch 7 zur Erzeugung von Wasserstoff, verwendet in der Medizin, in der Nahrungsmittelerzeugung, in der Herstellung von elektronischen Bauelementen, bei der Durchführung thermischer Verfahren von metallischen Produkten.
